(19) **Europäisches Patentamt**
**European Patent Office**
**Office européen des brevets**

(11) **EP 4 333 251 B1**

(12) **FASCICULE DE BREVET EUROPEEN**

(45) Date de publication et mention de la délivrance du brevet:
**02.07.2025 Bulletin 2025/27**

(21) Numéro de dépôt: **23193548.7**

(22) Date de dépôt: **25.08.2023**

(51) Classification Internationale des Brevets (IPC):
**H02J 7/00** *(2006.01)* **B60L 53/62** *(2019.01)*
**B60L 53/63** *(2019.01)*

(52) Classification Coopérative des Brevets (CPC):
**H02J 7/00304; B60L 53/62; B60L 53/63; H02J 7/00714**

(54) **PROCÉDÉ ET DISPOSITIF DE PILOTAGE D'UNE BORNE DE RECHARGE D'UN VÉHICULE ÉLECTRIQUE**

VERFAHREN UND VORRICHTUNG ZUR STEUERUNG EINER LADEKLEMME EINES ELEKTROFAHRZEUGS

METHOD AND DEVICE FOR CONTROLLING A CHARGING STATION OF AN ELECTRIC VEHICLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **30.08.2022 FR 2208671**

(43) Date de publication de la demande:
**06.03.2024 Bulletin 2024/10**

(73) Titulaire: **Delta Dore**
**35270 Bonnemain (FR)**

(72) Inventeur: **LE TUTOUR, Jean**
**35270 Bonnemain (FR)**

(74) Mandataire: **Cabinet Le Guen Maillet**
**3, impasse de la Vigie**
**CS 71840**
**35418 Saint-Malo Cedex (FR)**

(56) Documents cités:
**WO-A1-2021/069509     WO-A2-2013/144947**
**US-A1- 2011 133 693     US-A1- 2013 141 042**
**US-A1- 2018 264 966     US-A1- 2020 290 475**
**US-A1- 2022 190 626**

## Description

### DOMAINE TECHNIQUE

La présente invention concerne le domaine de l'alimentation électrique des véhicules électriques. La présente invention concerne plus particulièrement un procédé destiné à piloter une borne de recharge pour l'alimentation d'un véhicule électrique, dans un réseau électrique comprenant une limite maximale en courant ou en puissance.

### ETAT DE LA TECHNIQUE ANTERIEURE

L'utilisation de véhicules électriques est de plus en plus fréquente chez les particuliers. Une problématique associée à une telle utilisation concerne la recharge des batteries des véhicules électriques. En effet, la recharge des véhicules électriques est longue et nécessite un courant élevé. La quantité d'énergie électrique maximale délivrée à un réseau électrique d'un logement d'un particulier n'est pas toujours dimensionnée pour permettre une telle recharge de véhicule électrique en parallèle d'un fonctionnement habituel d'autres équipements électriques reliés au réseau électrique du logement. Un contrat de fourniture d'électricité d'un tel réseau électrique est généralement limité en courant ou en puissance. Lorsque plusieurs équipements électriques, tels qu'un four et un lave-linge, fonctionnent simultanément avec la recharge du véhicule électrique, cela peut alors générer une consommation électrique s'élevant au-delà d'une limite maximale de consommation. Une telle surconsommation électrique entraîne alors une coupure de l'alimentation électrique, par exemple par disjonction de l'installation.

Il est alors souhaitable de pallier ces inconvénients de l'état de la technique.

Il est notamment souhaitable de fournir une solution qui permette d'éviter une coupure de l'alimentation électrique d'un réseau électrique lorsqu'un véhicule électrique est en cours de recharge sur le réseau électrique. Il est en outre souhaitable de fournir une solution qui permette de conserver un fonctionnement habituel d'autres équipements électriques pendant la recharge d'un véhicule électrique. Il est enfin souhaitable de fournir une solution qui soit automatique et ne nécessite pas de régulation humaine. P

Le document US 2013/141042 A1 divulgue un exemple de dispositif et procédé de pilotage d'une borne de recharge destinée à recharger une batterie d'un véhicule électrique.

### EXPOSE DE L'INVENTION

Un objet de la présente invention est de proposer un procédé de pilotage d'une borne de recharge destinée à recharger une batterie d'un véhicule électrique et étant configurée pour délivrer un courant selon une consigne de recharge au véhicule électrique. La borne de recharge est alimentée par un réseau électrique délivrant un courant à au moins un autre équipement, le réseau électrique comportant un organe de coupure configuré pour arrêter la circulation du courant avec un délai de réaction lorsque le courant consommé par le réseau électrique atteint ou dépasse un seuil maximal prédéfini. Le procédé comporte de transmettre périodiquement une valeur de courant consommé par l'ensemble du réseau électrique avec une périodicité de transmission inférieure au délai de réaction de l'organe de coupure. Le procédé comporte en outre, pour chaque valeur de courant consommé transmise, des étapes de : modifier la consigne de recharge en soustrayant à ladite consigne de recharge, la valeur absolue de la différence entre la valeur de courant consommé et le seuil maximal prédéfini, si la valeur de courant consommé est supérieure au seuil maximal prédéfini ; et de modifier la consigne de recharge en additionnant, à ladite consigne de recharge, la valeur absolue de la différence entre la valeur de courant consommé et le seuil maximal prédéfini, si la valeur de courant consommé est inférieure au seuil maximal prédéfini. Le procédé comporte en outre, pour chaque valeur de courant consommé transmise, dite valeur précédente, de transmettre une nouvelle valeur de courant consommé selon la périodicité de transmission. La périodicité de transmission est égale à une première durée prédéfinie tant que la valeur précédente est supérieure ou égale au seuil maximal prédéfini et tant que le nombre de mesures successives de valeurs de courant consommé supérieures au seuil maximal prédéfini est inférieur à un premier nombre prédéterminé. La périodicité de transmission est égale à une deuxième durée prédéfinie tant que la valeur précédente est inférieure au seuil maximal prédéfini, et tant que le nombre de transmissions successives de valeurs de courant consommé inférieures au seuil maximal prédéfini est inférieur à un deuxième nombre prédéterminé. La périodicité de transmission est égale à une troisième durée prédéfinie sinon. La première durée prédéfinie est inférieure ou égale à la deuxième durée prédéfinie et la deuxième durée prédéfinie est inférieure à la troisième durée prédéfinie.

Ainsi, le courant délivré au véhicule électrique est automatiquement réduit lorsque le courant consommé par le réseau électrique s'élève au-dessus du seuil maximal prédéfini. Une coupure d'alimentation du réseau électrique est ainsi évitée lorsque d'autres équipements électriques fonctionnent parallèlement à la recharge du véhicule électrique. En outre, le courant délivré au véhicule électrique est optimisé lorsque le courant consommé par le réseau électrique est inférieur au seuil maximal prédéfini, ce qui permet d'augmenter la vitesse de recharge.

Par ailleurs, l'adaptation de la consigne de recharge du véhicule électrique est effectuée plus fréquemment lorsque la valeur de courant consommé par le réseau électrique franchit et s'élève au-dessus du seuil maximal prédéfini, ce qui permet d'obtenir une réactivité élevée de l'adaptation de la consigne de recharge et de réduire les risques de coupure du réseau électrique. En outre, lorsque la valeur de courant consommé franchit le seuil maximal prédéfini pour repasser en-dessous dudit seuil, l'adaptation de la consigne de recharge est effectuée à une fréquence intermédiaire, ce qui permet d'optimiser rapidement la consommation du véhicule électrique par rapport au courant disponible tout en limitant un encombrement en termes de bande passante d'un lien de communication entre la borne de recharge et un dispositif implémentant le procédé de pilotage. Enfin, dans les autres situations, l'adaptation de la consigne de recharge est effectuée à une fréquence faible, permettant ainsi de maintenir une surveillance de la consommation électrique tout en limitant le traitement de données et la transmission d'informations.

Selon un mode de réalisation particulier, le premier nombre prédéterminé et le deuxième nombre prédéterminé sont compris entre 5 et 10.

Selon un mode de réalisation particulier, la première durée prédéfinie et la deuxième durée prédéfinie sont égales à quelques secondes.

Selon un mode de réalisation particulier, les étapes de modifier la consigne de recharge sont effectuées seulement lorsque la valeur absolue de la différence entre la valeur de courant consommé et le seuil maximal prédéfini est supérieure ou égale à un deuxième seuil prédéfini.

Selon un mode de réalisation particulier, le procédé comporte en outre de réduire la consigne de recharge à une consigne minimale prédéfinie lorsqu'aucune nouvelle transmission de courant consommé n'est effectuée après une période de temporisation prédéfinie après une transmission précédente d'une valeur de courant consommé, la période de temporisation prédéfinie étant supérieure ou égale à la troisième durée prédéfinie.

L'invention concerne également un dispositif de pilotage d'une borne de recharge destinée à recharger une batterie d'un véhicule électrique et étant configurée pour délivrer un courant selon une consigne de recharge au véhicule électrique. La borne de recharge est alimentée par un réseau électrique délivrant un courant à au moins un autre équipement, le réseau électrique comportant un organe de coupure configuré pour arrêter la circulation du courant avec un délai de réaction lorsque le courant consommé par le réseau électrique atteint ou dépasse un seuil maximal prédéfini. Le dispositif comporte des moyens pour transmettre périodiquement une valeur de courant consommé par l'ensemble du réseau électrique avec une périodicité de transmission inférieure au délai de réaction de l'organe de coupure, et comporte, pour chaque valeur de courant consommé transmise : des moyens pour modifier la consigne de recharge en soustrayant à ladite consigne de recharge, la valeur absolue de la différence entre la valeur de courant consommé et le seuil maximal prédéfini, si la valeur de courant consommé est supérieure au seuil maximal prédéfini ; et des moyens pour modifier la consigne de recharge en additionnant à ladite consigne de recharge, la valeur absolue de la différence entre la valeur de courant consommé et le seuil maximal prédéfini, si la valeur de courant consommé est inférieure au seuil maximal prédéfini. Le dispositif comporte en outre, pour chaque valeur de courant consommé transmise, dite valeur précédente, des moyens pour transmettre une nouvelle valeur de courant consommé selon la périodicité de transmission. La périodicité de transmission est égale à une première durée prédéfinie tant que la valeur précédente est supérieure ou égale au seuil maximal prédéfini et tant que le nombre de transmissions successives de valeurs de courant consommé supérieures au seuil maximal prédéfini est inférieur à un premier nombre prédéterminé. La périodicité de transmission est égale à une deuxième durée prédéfinie tant que la valeur précédente est inférieure au seuil maximal prédéfini, et tant que le nombre de déterminations successives de valeurs de courant consommé inférieures au seuil maximal prédéfini est inférieur à un deuxième nombre prédéterminé. La périodicité de transmission est égale à une troisième durée prédéfinie sinon. La première durée prédéfinie est inférieure ou égale à la deuxième durée prédéfinie et la deuxième durée prédéfinie est inférieure à la troisième durée prédéfinie.

Il est également proposé un produit programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de ses modes de réalisation, lorsque ledit programme d'ordinateur est exécuté par le processeur.

L'invention concerne également un support de stockage d'informations stockant un tel programme d'ordinateur comprenant des instructions pour implémenter le procédé mentionné ci-dessus dans l'un quelconque de ses modes de réalisation lorsque ledit programme d'ordinateur est lu depuis ledit support de stockage et exécuté par le processeur.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement un réseau électrique et un dispositif de pilotage d'une borne de recharge ;

[Fig. 2] illustre schématiquement un exemple d'architecture matérielle du dispositif de pilotage ;

[Fig. 3] illustre schématiquement une première partie d'un procédé de pilotage d'une borne de recharge ;

[Fig. 4] illustre schématiquement une deuxième partie du procédé de pilotage de la borne de recharge ; et

[Fig. 5] illustre schématiquement un chronogramme de déterminations de courant consommé par le réseau électrique.

EXPOSE DETAILLE DE MODES DE REALISATION

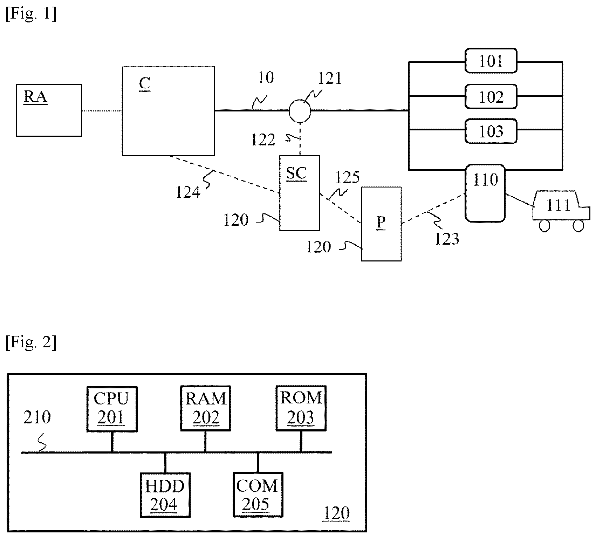

La **Fig. 1** illustre ainsi schématiquement un réseau électrique 10 et un dispositif de pilotage 120 d'une borne de recharge 110.

Le réseau électrique 10 est par exemple un réseau électrique domestique destiné à alimenter en énergie électrique des équipements d'un logement. Le réseau électrique 10 alimente des équipements 101, 102, 103. Le réseau électrique 10 alimente en outre la borne de recharge 110.

La borne de recharge 110 est destinée à recharger une batterie d'un véhicule électrique 111. La borne de recharge 110 est configurée pour délivrer un courant au véhicule électrique 111 selon une consigne de recharge $C_{ch}$. Autrement dit, la consigne de recharge est représentative du courant devant être délivré au véhicule électrique 111. La consigne de recharge $C_{ch}$ est entre autres définie en fonction d'un niveau de charge de la batterie du véhicule électrique 11. Le véhicule électrique 11 consomme alors au maximum le courant électrique défini par la consigne de recharge $C_{ch}$. La norme NF EN IEC 61851-1 définit que la consigne de recharge varie entre 6 et 64A. La consigne de recharge varie préférentiellement entre 8 et 32 A.

Le réseau électrique 10 comporte en outre un compteur C. Le compteur C est situé à l'entrée du réseau électrique et relié à un réseau d'alimentation RA en électricité. Le compteur C est adapté pour déterminer la consommation globale du réseau électrique 10, autrement dit le courant consommé par le réseau électrique 10. Le compteur C peut comprendre une identification d'un abonné utilisant le réseau électrique 10. En outre, le courant consommé par le réseau électrique 10 est limité par un seuil maximal prédéfini $S_{max}$, correspondant à une limite maximale en courant. En cas de dépassement du seuil maximal prédéfini $S_{max}$, le compteur C est configuré pour couper l'alimentation du réseau électrique 10, par le biais d'un organe de coupure du compteur C dédié, tel qu'un disjoncteur. La coupure d'alimentation du réseau électrique 10 est effectuée avec un délai de réaction de l'organe de coupure, ledit délai de réaction étant dépendant d'un rapport entre le courant consommé réel et le seuil maximal prédéfini $S_{max}$. Par exemple, le délai de réaction de l'organe de coupure est de 40s pour un courant consommé égal à 2,5 fois le seuil maximal prédéfini, et de 200s pour un courant consommé égal à 1,4 fois le seuil maximal prédéfini.

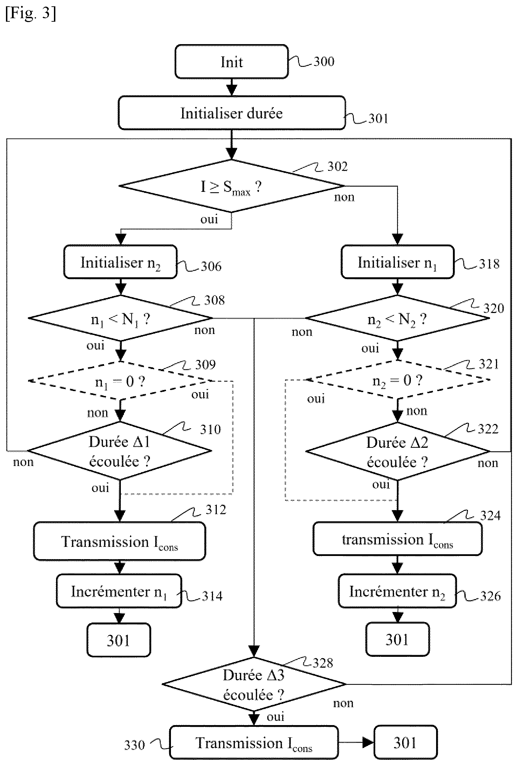

Le dispositif de pilotage 120 comporte un sous-compteur SC et un pilote P de la borne de recharge 110. Le sous-compteur SC comporte un dispositif de mesure 121 configuré pour mesurer, en permanence, une valeur de courant consommé $I_{cons}$ par l'ensemble du réseau électrique 10. Alternativement, le sous-compteur SC est relié au dispositif de mesure 121 par un lien de communication 122 filaire ou sans fil et reçoit en permanence des valeurs de courant consommé $I_{cons}$ déterminées par le dispositif de mesure 121. Le sous-compteur SC transmet périodiquement une valeur de courant consommé $I_{cons}$ et détermine la durée, ou périodicité de transmission, s'écoulant entre deux transmissions de valeurs de courant consommé $I_{cons}$ successives selon une première partie d'un procédé de pilotage de la borne de recharge 110 telle que défini par l'algorithme de la Fig. 3. Selon un mode de réalisation particulier, le sous-compteur SC est relié au compteur C par un lien de communication 124. Le sous-compteur SC peut alors recevoir, en provenance du compteur C des informations relatives à des périodes tarifaires, et des informations de courant maximal. Le sous-compteur SC peut en outre recevoir, en provenance du compteur C, le seuil maximal prédéfini $S_{max}$, qui est obtenu par le compteur C par le biais d'un bus de communication dédié tel qu'un bus de télé-information client. Le seuil maximal prédéfini $S_{max}$ est ensuite transmis du sous-compteur SC au pilote P. Alternativement, le seuil maximal prédéfini $S_{max}$, peut être configuré par enregistrement d'une constante en mémoire dans le pilote P et le sous-compteur SC.

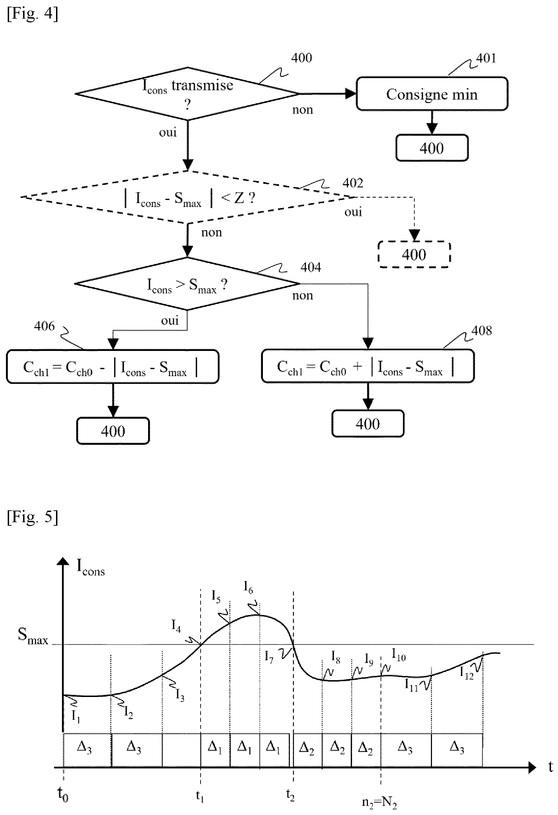

Le pilote P est relié à la borne de recharge 110 par un lien de communication 123 filaire ou sans fil. Le pilote P détermine, pour chaque valeur de courant consommé $I_{cons}$ transmise, si la consigne de recharge $C_{ch}$ définie par la borne de recharge 110 doit être modifiée et, si c'est le cas, détermine la nouvelle consigne de recharge $C_{ch}$, selon une deuxième partie du procédé de pilotage de la borne de recharge telle que définie par l'algorithme de la Fig. 4. Le pilote P transmet ensuite ladite nouvelle consigne de recharge $C_{ch}$ à la borne de recharge 110 pour que la borne de recharge 110 modifie le courant délivré au véhicule électrique 111. Le pilote P permet ainsi d'adapter la consommation électrique du véhicule électrique 111 en tenant compte de la consommation des équipements 101, 102, 103. Lorsque les équipements 101, 102, 103 consomment un courant élevé, le pilote P, en modifiant la consigne de recharge $C_{ch}$, réduit ainsi la consommation du véhicule électrique 111 pour éviter que l'alimentation du réseau électrique 10 ne soit coupée. Lorsque les équipements 101, 102, 103 consomment un courant plus faible, le pilote P, en modifiant la consigne de recharge $C_{ch}$, augmente la consommation du véhicule électrique 111 et augmente ainsi la vitesse de recharge du véhicule électrique 111.

De manière alternative, la tension délivrée au réseau électrique étant constante, les valeurs de courant sont remplacées par des valeurs de puissance. Ainsi, la valeur de courant consommé $I_{cons}$ est remplacée par une valeur de puissance consommée et le seuil maximal prédéfini $S_{max}$ est une limite maximale en puissance. La consigne de recharge $C_{ch}$ est représentative du courant devant être délivré au véhicule électrique 111 et est alors comparée au seuil maximal prédéfini $S_{max}$ représentatif d'une limite maximale en courant.

La consigne de recharge $C_{ch}$ peut être alternativement représentative de la puissance devant être délivrée au véhicule électrique 111 et est alors comparée au seuil maximal prédéfini $S_{max}$ représentatif d'une limite maximale en puissance. La puissance est déterminée comme le produit du courant par la tension, la tension étant égale à la tension du réseau électrique 10, telle qu'une tension efficace de 230V. La tension peut être soit estimée, soit mesurée sur le réseau électrique 10.

Selon un mode de réalisation préférentiel, le pilote P est intégré à la borne de recharge et communique avec le sous-compteur par un lien de communication filaire ou sans fil 125, permettant de transmettre, en provenance du sous-compteur SC, les valeurs de courant consommé $I_{cons}$ au pilote P selon la périodicité de transmission.

La **Fig. 2** illustre schématiquement un exemple d'architecture matérielle du dispositif de pilotage 120. Le dispositif de pilotage 120 comporte alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, tel qu'un disque dur HDD (« Hard Disk Drive » en anglais) 204 ; et une interface 205 permettant de communiquer avec le dispositif de mesure 121 et la borne de recharge 110.

Le processeur 201 est capable d'exécuter des instructions chargées dans la RAM 202 à partir de la ROM 203, d'une mémoire externe (non représentée), d'un support de stockage, ou d'un réseau de communication. Lorsque le dispositif de pilotage 120 est mis sous tension, le processeur 201 est capable de lire de la RAM 202 des instructions et de les exécuter. Ces instructions forment un programme d'ordinateur causant l'implémentation, par le processeur 201, de tout ou partie des algorithmes et étapes décrits ci-après en relation avec le dispositif de pilotage 120.

Ainsi, tout ou partie des algorithmes et étapes décrits ci-après en relation avec le dispositif de pilotage 120 peut être implémenté sous forme logicielle par exécution d'un ensemble d'instructions par une machine programmable, telle qu'un DSP (« Digital Signal Processor » en anglais) ou un microcontrôleur, ou sous forme matérielle par une machine ou un composant dédié, tel qu'un FPGA (« Field-Programmable Gate Array » en anglais) ou un ASIC (« Application-Specific Integrated Circuit » en anglais).

Selon un mode de réalisation particulier, le sous-compteur SC d'une part et le pilote P d'autre part comportent chacun une unité de contrôle, et l'architecture matérielle de chaque unité de contrôle est identique à l'architecture matérielle du dispositif de pilotage 120 telle que représentée en Fig. 2. L'interface 205 de l'unité de contrôle du sous-compteur SC permet de communiquer avec le dispositif de mesure 121 et avec le pilote P. L'interface 205 de l'unité de contrôle du pilote P permet de communiquer avec le sous-compteur SC et avec la borne de recharge 110.

La **Fig. 3** illustre ainsi schématiquement la première partie du procédé de pilotage de la borne de recharge 110, selon un premier mode de réalisation, implémenté par le sous-compteur SC du dispositif de pilotage 120. La première partie du procédé de pilotage est implémentée en permanence par le sous-compteur SC.

Dans une première étape 300, le sous-compteur SC démarre la réception de valeurs de courant consommé mesurées par le dispositif de mesure 121, lesdites valeurs de courant consommé étant mesurées en permanence, autrement dit à des fréquences élevées de l'ordre de quelques dizaines de millisecondes.

Selon un mode de réalisation particulier, le sous-compteur attribue à une première variable $n_1$ une valeur égale à un premier nombre prédéfini $N_1$ et attribue à une deuxième variable $n_2$ une valeur égale à un deuxième nombre prédéfini $N_2$. La première variable $n_1$ est utilisée pour compter le nombre de transmissions successives de valeurs de courant consommé supérieures au seuil maximal prédéfini, tandis que la deuxième variable $n_2$ est utilisée pour compter le nombre de transmissions successives de valeurs de courant consommé inférieures au seuil maximal prédéfini. Ainsi, lorsque le procédé démarre, les valeurs attribuées aux première et deuxième variables $n_1$, $n_2$ sont telles que la périodicité de transmission est égale à une troisième durée prédéfinie $\Delta 3$, telle que définie à une étape ultérieure 328.

Dans une étape suivante 301, un compteur de temps est initialisé à zéro à un instant où une transmission précédente d'une valeur de courant consommé $I_{cons}$, appelée valeur précédente $I_{prec}$, est effectuée.

Si aucune transmission n'a encore été effectuée, le compteur de temps est initialisé à zéro lorsque le procédé est démarré.

Dans une étape 302 suivante, le sous-compteur SC détermine si la dernière valeur de courant consommé mesurée $I$ par le dispositif de mesure 121 est supérieure ou égale au seuil maximal prédéfini $S_{max}$. Si c'est le cas, une étape 306 est effectuée. Sinon, une étape 318 est effectuée.

A l'étape 306, le seuil maximal prédéfini $S_{max}$ est dépassé. Le sous-compteur SC initialise la deuxième variable $n_2$ à zéro de sorte que si le courant consommé mesuré $I$ par le dispositif de mesure 121 repasse en-dessous du seuil maximal prédéfini $S_{max}$, lors d'une itération suivante de l'étape 302, la deuxième variable $n_2$, utilisée pour compter le nombre de valeurs de courant consommé successives transmises inférieures au seuil maximal prédéfini, est égale à zéro.

A l'étape 308, le sous-compteur SC détermine si la première variable $n_1$ est inférieure au premier nombre prédéfini $N_1$. Si c'est le cas, une étape 309 est effectuée. Sinon, l'étape 328 est effectuée.

Le premier nombre prédéfini $N_1$ est par exemple égal à 10, ce qui permet d'obtenir une diminution du courant consommé par la borne de recharge 110 par une modification de la consigne de recharge $C_{ch}$ telle que décrite ci-après à l'étape 406, la modification étant suffisante pour que la valeur de courant consommé $I_{cons}$ repasse au-dessous du seuil maximal prédéfini $S_{max}$.

A l'étape 309 optionnelle, le sous-compteur SC détermine si la première variable $n_1$ est égale à zéro. Si c'est le cas, une étape 312 est aussitôt effectuée. Ainsi, lorsque le seuil maximal prédéfini est franchi et dépassé, une valeur de courant consommé est transmise dès que le franchissement dudit seuil maximal prédéfini est détecté par le sous-compteur SC. Sinon, une étape 310 est effectuée.

A l'étape 310, le sous-compteur SC détermine si une première durée prédéfinie $\Delta 1$ est écoulée depuis l'initialisation du compteur de temps effectuée à l'étape 301 précédente. Si c'est le cas, une étape 312 est effectuée. Sinon, le sous-compteur SC retourne à l'étape 302.

La première durée prédéfinie $\Delta 1$ est de l'ordre de la seconde ou de quelques secondes et par exemple égale ou supérieure à deux secondes. La première durée prédéfinie $\Delta 1$ est ainsi suffisamment courte pour permettre, comme cela sera explicité par la suite, d'adapter la consigne de recharge $C_{ch}$ avant que l'alimentation du réseau électrique 10 ne soit coupée, lors d'un dépassement du seuil maximal prédéfini $S_{max}$. Ladite première durée prédéfinie $\Delta 1$ est donc inférieure au délai de réaction de l'organe de coupure du compteur C. Le délai de réaction de l'organe de coupure peut être prédéfini selon une courbe de temps de délestage de l'organe de coupure. Par exemple, avec un seuil maximal prédéfini $S_{max}$ égal à 6KVA, et un courant consommé de 32 A, la disjonction, pour un compteur C électrique communiquant tel que le Linky, se produit environ 30 secondes après le dépassement du seuil maximal prédéfini $S_{max}$.

En outre, la première durée prédéfinie $\Delta 1$ est supérieure à une durée maximale de réaction de la borne de recharge 110 et du véhicule électrique 111, autrement dit à une durée nécessaire à la borne de recharge 110 pour implémenter une modification de la consigne de recharge $C_{ch}$ telle que définie ci-après à l'étape 406. La première durée prédéfinie $\Delta 1$ prend ainsi en compte la réactivité de la borne de recharge 110, la réactivité de la borne de recharge 110 pouvant être prédéfinie, par exemple selon une norme, ou déterminée par des tests effectués préalablement à la mise en œuvre de l'invention. La première durée prédéfinie $\Delta 1$ est ainsi suffisamment longue pour obtenir un asservissement sur la consigne de recharge $C_{ch}$ qui soit stable.

Notons par ailleurs que la première partie du procédé de pilotage est implémentée sur un laps de temps inférieur au délai de réaction de l'organe de coupure.

A l'étape 312, le sous-compteur SC transmet une nouvelle valeur de courant consommé $I_{cons}$ correspondant à la dernière valeur de courant consommé mesurée par le dispositif de mesure 121 et reçue par le sous-compteur SC. Ainsi, tant que le nombre de valeurs de courant consommé successives supérieures au seuil maximal prédéfini $S_{max}$ est inférieur au premier nombre prédéfini $N_1$, la mesure d'une nouvelle valeur de courant consommé est effectuée à une périodicité égale à la première durée prédéfinie $\Delta 1$. Les valeurs successives de courant consommé $I_{cons}$ sont alors mesurées à des intervalles temporels courts de durée prédéfinie $\Delta 1$, ce qui permet d'éviter une coupure de l'alimentation du réseau électrique 10.

Dans une étape 314 suivante, le sous-compteur SC incrémente la première variable $n_1$. Le sous-compteur SC retourne ensuite à l'étape 301.

A l'étape 318, le courant consommé mesuré est inférieur au seuil maximal prédéfini $S_{max}$. Le sous-compteur SC initialise la première variable $n_1$ à zéro de sorte que si le courant consommé mesuré $I$ par le dispositif de mesure 121 franchit et dépasse le seuil maximal prédéfini $S_{max}$ lors d'une itération suivante de l'étape 302, la première variable $n_1$, utilisée pour compter le nombre de valeurs successives de courant consommé transmises supérieures au seuil maximal prédéfini, est égale à zéro.

A l'étape 320, le sous-compteur SC détermine si la première variable $n_2$ est inférieure au deuxième nombre prédéfini $N_2$. Si c'est le cas, une étape 322 est effectuée. Sinon, l'étape 328 est effectuée. Le deuxième nombre prédéfini $N_2$ est par exemple compris entre 5 et 10.

A l'étape 321 optionnelle, le sous-compteur SC détermine si la deuxième variable $n_2$ est égale à zéro. Si c'est le cas, une étape 324 est aussitôt effectuée. Ainsi, lorsque le courant consommé redescend au-dessous du seuil maximal prédéfini, une valeur de courant consommé est transmise dès que le franchissement dudit seuil maximal prédéfini est détecté par le sous-compteur SC. Sinon, une étape 322 est effectuée.

A l'étape 322, le sous-compteur SC détermine si une deuxième durée prédéfinie $\Delta 2$ est écoulée depuis l'initialisation du compteur de temps effectuée à l'étape 301 précédente. Si c'est le cas, une étape 324 est effectuée. Sinon, le sous-compteur SC retourne à l'étape 302.

La deuxième durée prédéfinie $\Delta 2$ est de l'ordre de quelques secondes et est par exemple égale ou supérieure à cinq secondes. Le deuxième nombre prédéfini $N_2$, associé à la deuxième durée prédéfinie $\Delta 2$, permet, comme cela sera explicité par la suite, de réadapter la consigne de recharge $C_{ch}$ lorsque la valeur de courant consommé $I_{cons}$ redescend en-dessous du seuil maximal prédéfini $S_{max}$ et permet ainsi d'optimiser la consommation de courant en évitant de maintenir une consommation trop faible par rapport aux capacités du réseau électrique 10.

A l'étape 324 suivante, le sous-compteur SC transmet une nouvelle valeur de courant consommé $I_{cons}$ correspondant à la dernière mesure de courant consommée reçue en provenance du dispositif de mesure 121.

Ainsi, tant que le nombre de valeurs de courant consommé successives inférieures au seuil maximal prédéfini $S_{max}$ est inférieur au deuxième nombre prédéfini $N_2$, la mesure d'une nouvelle valeur de courant consommé est effectuée à une périodicité égale à la deuxième durée prédéfinie $\Delta 2$. Les valeurs successives de courant consommé $I_{cons}$ sont alors mesurées à des intervalles temporels intermédiaires de durée prédéfinie $\Delta 2$, la deuxième durée prédéfinie $\Delta 2$ étant plus grande ou égale à la première durée $\Delta 1$ prédéfinie.

Dans une étape 326 suivante, le sous-compteur SC incrémente la deuxième variable $n_2$. Le sous-compteur SC retourne ensuite à l'étape 301.

A l'étape 328, le sous-compteur SC détermine si une troisième durée prédéfinie $\Delta 3$ est écoulée depuis l'initialisation du compteur de temps effectuée à l'étape 301 précédente. Si c'est le cas, une étape 330 est effectuée. Sinon, le sous-compteur SC retourne à l'étape 302.

La troisième durée prédéfinie $\Delta 3$ est supérieure à la première durée prédéfinie $\Delta 1$ et à la deuxième durée prédéfinie $\Delta 2$. La troisième durée prédéfinie $\Delta 3$ est de l'ordre de plusieurs dizaines de secondes et est par exemple comprise entre 30 et 60 secondes. La troisième durée prédéfinie $\Delta 3$ est suffisamment longue pour limiter un encombrement des transmissions radio dans le cas où le sous-compteur SC est relié au pilote P par le lien de communication 125 sans fil.

A l'étape 330, le sous-compteur SC transmet une nouvelle valeur de courant consommé $I_{cons}$ correspondant à la dernière valeur de courant consommé en provenance du dispositif de mesure 121.

L'homme du métier peut modifier aisément l'algorithme de la Fig. 3 en décrémentant la première variable $n_1$ plutôt qu'en l'incrémentant, et en décrémentant la seconde variable $n_2$ plutôt qu'en l'incrémentant.

Selon un second mode de réalisation, la deuxième variable $n_2$ est remplacée par un deuxième compteur de temps et le deuxième nombre prédéfini $N_2$ est remplacé par une limite temporelle maximale. Selon un exemple, la limite temporelle maximale est de l'ordre de 5 secondes. A l'étape 300, le sous-compteur attribue une valeur égale à la limite temporelle maximale au deuxième compteur. A l'étape 306, le deuxième compteur de temps est réinitialisé à zéro. A l'étape 320, le sous-compteur SC détermine si le deuxième compteur de temps reste inférieur à la limite temporelle maximale. Si c'est le cas, l'étape 322 est effectuée et sinon, l'étape 328 est effectuée. L'étape 326 est alors supprimée.

La **Fig. 4** illustre schématiquement la deuxième partie du procédé de pilotage de la borne de recharge 110 implémenté par le pilote P du dispositif de pilotage 120.

Dans une première étape 400, le pilote P détermine si une valeur de courant consommé $I_{cons}$ est transmise et reçue après une période de temporisation prédéfinie après une transmission précédente d'une valeur de courant consommé $I_{cons}$. Si c'est le cas, une étape 402 est effectuée. Sinon, une étape 401 est effectuée. La période de temporisation est par exemple de 30s. Selon un mode de réalisation particulier, la période de temporisation est égale à la troisième durée prédéfinie $\Delta 3$. En variante, la période de temporisation est égale à plusieurs fois la durée prédéfinie $\Delta 3$. Ainsi, l'étape 401 est effectuée seulement lorsque plusieurs valeurs de courant consommé successives ne sont pas reçues.

A l'étape 401, le pilote P modifie la consigne de recharge $C_{ch}$, la nouvelle consigne de recharge $C_{ch1}$ étant égale à une consigne minimale ou alternativement à une consigne nulle. La consigne minimale est par exemple égale à 8A. Le pilote P transmet ensuite la nouvelle consigne de recharge $C_{ch1}$ à la borne de recharge 110 avec une instruction de modification de la consigne de recharge $C_{ch}$. Ainsi, en cas d'un défaut de transmission d'une valeur de courant consommé $I_{cons}$, entre le dispositif de de mesure 121 et le sous-compteur SC ou entre le sous-compteur SC et le pilote P, une coupure d'alimentation du réseau électrique 10 est évitée. Le pilote P retourne ensuite à l'étape 400.

Dans une étape 402 suivante optionnelle, le pilote P détermine si la différence, en valeur absolue, entre la valeur de courant consommé $I_{cons}$ et le seuil maximal prédéfini $S_{max}$ est inférieure à un deuxième seuil prédéfini Z. Le seuil prédéfini Z est par exemple égal à 5% de la valeur de courant définie par le seuil maximal prédéfini $S_{max}$. Si c'est le cas, une étape 310 est effectuée. Sinon, le pilote P n'effectue pas de modification de la consigne de recharge $C_{ch}$. et retourne à l'étape 404.

Ainsi, lorsque la valeur de courant consommé $I_{cons}$ reste proche du seuil maximal prédéfini $S_{max}$, par exemple dans une zone où l'alimentation du réseau électrique 10 ne risque pas d'être coupée, alors la consigne de recharge $C_{ch}$ n'est pas modifiée. En outre, des transmissions de valeurs de courant consommé $I_{cons}$ sont évitées, ce qui réduit la consommation du dispositif de pilotage et limite l'encombrement en termes de bande passante des liens de communication 123, 125.

A l'étape 404, le pilote P détermine si la valeur de courant consommé $I_{cons}$ est supérieure au seuil maximal prédéfini $S_{max}$. Si c'est le cas, une étape 406 est effectuée. Sinon, une étape 408 est effectuée.

A l'étape 406, le pilote P détermine une modification de la consigne de recharge $C_{ch}$, la nouvelle consigne de recharge $C_{ch1}$ étant égale à la consigne de recharge précédente $C_{ch0}$ à laquelle est soustrait l'écart entre la valeur de courant consommé $I_{cons}$ et le seuil maximal prédéfini $S_{max}$. La nouvelle consigne de recharge $C_{ch1}$ est alors égale à :

$C_{ch1} = C_{ch0} - |\, I_{cons} - S_{max}\, |$, avec $C_{ch0}$ la consigne de recharge précédente, $I_{cons}$ la valeur de courant consommé $I_{cons}$ transmise, et $S_{max}$, le seuil maximal prédéfini $S_{max}$.

Le pilote P transmet ensuite la nouvelle consigne de recharge $C_{ch1}$ à la borne de recharge 110 avec une instruction de modification de la consigne de recharge $C_{ch1}$.

Ainsi, lorsque la valeur de courant consommé $I_{cons}$ dépasse le seuil maximal prédéfini $S_{max}$, le dispositif de pilotage 120 permet de réduire la consigne de recharge $C_{ch}$ de la borne de recharge 110, ce qui évite une coupure d'alimentation du réseau électrique 10.

Le pilote P retourne ensuite à l'étape 400.

A l'étape 408, le pilote P détermine une modification de la consigne de recharge $C_{ch}$, la nouvelle consigne de recharge $C_{ch1}$ étant égale à la consigne de recharge précédente $C_{ch0}$ à laquelle est additionné l'écart entre le seuil maximal prédéfini $S_{max}$ et la valeur de courant consommé $I_{cons}$. La nouvelle consigne de recharge $C_{ch1}$ est alors égale à :

$$C_{ch1} = C_{ch0} + \left| I_{cons} - S_{max} \right|.$$

Le pilote P transmet ensuite la nouvelle consigne de recharge $C_{ch1}$ à la borne de recharge 110 avec une instruction de modification de la consigne de recharge $C_{ch}$.

Ainsi, lorsque la valeur de courant consommé $I_{cons}$ est en-dessous du seuil maximal prédéfini $S_{max}$, le dispositif de pilotage 120 permet d'augmenter la consigne de recharge $C_{ch}$ afin d'améliorer la vitesse de charge du véhicule électrique 111, tout en évitant une coupure d'alimentation du réseau électrique 10.

Le pilote P retourne ensuite à l'étape 400.

La **Fig. 5** illustre schématiquement un chronogramme de détermination de valeurs de courant consommé $I_{cons}$ par le réseau électrique 10. Le chronogramme est représenté par une succession de laps de temps de première, deuxième ou troisième durée prédéfinie $\Delta1$, $\Delta2$ ou $\Delta3$. En outre, une évolution de la valeur du courant consommé $I_{cons}$ par le réseau électrique 10 est représentée selon un axe temporel t commun au chronogramme. Le seuil maximal prédéfini $S_{max}$ est également indiqué relativement au courant consommé par le réseau électrique 10. Pour une détermination de valeurs de puissance consommée, un chronogramme similaire peut être représenté, le seuil maximal prédéfini $S_{max}$ étant alors relatif à des valeurs de puissance et non de courant.

A un instant initial $t_0$, une première valeur $I_1$ de courant consommé est déterminée par le dispositif de mesure 121 et reçue par le sous-compteur SC du dispositif de pilotage 120. La première valeur $I_1$ de courant consommé peut ou non être transmise au pilote P. En outre, le sous-compteur SC attribue une valeur finale aux première et deuxième variables $n_1$ et $n_2$. Autrement dit, le sous-compteur SC attribue le premier nombre prédéfini $N_1$ à la première variable $n_1$ et attribue le deuxième nombre prédéfini $N_2$ à la deuxième variable $n_2$, tel que décrit précédemment à l'étape 300.

La première valeur $I_1$ de courant consommé ainsi déterminée étant inférieure au seuil maximal prédéfini $S_{max}$, et la deuxième variable $n_2$ étant égale à $N_2$, le sous-compteur SC attend l'écoulement de la troisième durée prédéfinie $\Delta3$ avant de transmettre une deuxième valeur $I_2$ de courant consommé, conformément à l'étape 330, à un instant $t_0$+ $\Delta3$. Dit autrement, la périodicité de transmission est égale à la troisième durée prédéfinie $\Delta3$. Notons par ailleurs que la première variable $n_1$ est réinitialisée à zéro, conformément à l'étape 318.

Tant que les valeurs de courant consommé $I$ mesurées par le dispositif de mesure restent en-dessous du seuil maximal prédéfini, et considérant que la deuxième variable $n_2$ reste égale à $N_2$, la périodicité de transmission reste égale à la troisième durée prédéfinie $\Delta3$. Ainsi, une troisième valeur $I_3$ de courant consommé est transmise par le sous-compteur SC à un instant $t_0$ +2* $\Delta3$.

A un instant $t_1$, le sous-compteur SC détermine, à l'étape 302 du procédé, que le courant consommé mesuré par le dispositif de mesure 121 est supérieur au seuil maximal prédéfini $S_{max}$. La deuxième variable $n_2$ est réinitialisée à zéro, conformément à l'étape 306, puis une quatrième valeur $I_4$ de courant consommé est transmise aussitôt conformément à la succession d'étapes 309 et 312 puisque la première variable $n_1$ est nulle.

Ensuite, le sous-compteur SC détermine que le courant consommé mesuré reste supérieur au seuil maximal prédéfini $S_{max}$. et tant que la première variable $n_1$ reste inférieure à $N_1$ (selon cet exemple, $N_1$ = 5), la périodicité de transmission est égale à la première durée prédéfinie $\Delta1$ telle que définie à l'étape 310. Ainsi, une cinquième valeur $I_5$ de courant consommé, puis une sixième valeur $I_6$ de courant consommé sont transmises successivement à la périodicité de transmission de première durée prédéfinie $\Delta1$. La première variable $n_1$ est incrémentée après chaque transmission des cinquième valeur $I_5$ et sixième valeur $I_6$ de courant consommé.

A un instant $t_2$, le sous-compteur SC détermine, à l'étape 302 du procédé, que le courant consommé mesuré par le dispositif de mesure 121 est inférieur au seuil maximal prédéfini $S_{max}$. La première variable $n_1$ est réinitialisée à zéro, conformément à l'étape 318, puis une septième valeur $I_7$ de courant consommé est transmise aussitôt conformément à la succession d'étapes 321 et 322 puisque la deuxième variable $n_2$ est nulle.

Ensuite, le sous-compteur SC détermine que le courant consommé mesuré reste inférieur au seuil maximal prédéfini $S_{max}$. et tant que la deuxième variable $n_2$ reste inférieure à $N_2$, la périodicité de transmission est égale à la deuxième durée prédéfinie $\Delta2$ telle que définie à l'étape 322. Ainsi, une huitième valeur $I_8$ de courant consommé, puis une neuvième valeur $I_9$ de courant consommé, puis une dixième valeur $I_{10}$ de courant consommé sont transmises successivement à la périodicité de transmission de deuxième durée prédéfinie $\Delta2$. La deuxième variable $n_2$ est incrémentée après chaque transmission des septième, huitième, neuvième et dixième valeurs de courant consommé et atteint le deuxième nombre prédéfini $N_2$ après la transmission de la dixième valeur $I_{10}$ de courant consommé (dans cet exem-

ple, $N_2 = 3$).

Le sous-compteur SC détermine alors que le courant consommé mesuré reste inférieur au seuil maximal prédéfini $S_{max}$. Comme la deuxième variable $n_2$ est supérieure à $N_2$, alors une onzième valeur $I_{11}$ de courant consommé, puis une douzième valeur $I_{12}$ de courant consommé sont transmises successivement à la périodicité de transmission de troisième durée prédéfinie $\Delta 3$.

**Revendications**

1. Procédé de pilotage d'une borne de recharge (110) destinée à recharger une batterie d'un véhicule électrique (111), et étant configurée pour délivrer un courant selon une consigne de recharge ($C_{ch}$) au véhicule électrique (111),

   la borne de recharge (110) étant alimentée par un réseau électrique (10) délivrant un courant à au moins un autre équipement (101, 102, 103), le réseau électrique (10) comportant un organe de coupure configuré pour arrêter la circulation du courant avec un délai de réaction lorsque le courant consommé par le réseau électrique (10) atteint ou dépasse un seuil maximal prédéfini ($S_{max}$),
   le procédé comportant de transmettre périodiquement une valeur de courant consommé ($I_{cons}$) par l'ensemble du réseau électrique (10) avec une périodicité de transmission inférieure au délai de réaction de l'organe de coupure,
   le procédé étant **caractérisé en ce qu'**il comporte, pour chaque valeur de courant consommé ($I_{cons}$) transmise, des étapes de :

      - Modifier (406) la consigne de recharge ($C_{ch}$) en soustrayant à ladite consigne de recharge ($C_{ch}$), la valeur absolue de la différence entre la valeur de courant consommé ($I_{cons}$) et le seuil maximal prédéfini ($S_{max}$), si la valeur de courant consommé ($I_{cons}$) est supérieure au seuil maximal prédéfini ($S_{max}$),
      - Modifier (408) la consigne de recharge ($C_{ch}$) en additionnant à ladite consigne de recharge ($C_{ch}$), la valeur absolue de la différence entre la valeur de courant consommé ($I_{cons}$) et le seuil maximal prédéfini ($S_{max}$), si la valeur de courant consommé ($I_{cons}$) est inférieure au seuil maximal prédéfini ($S_{max}$),

      et **en ce que** le procédé comporte, pour chaque valeur de courant consommé ($I_{cons}$) transmise, dite valeur précédente ($I_{prec}$), de transmettre une nouvelle valeur de courant consommé selon la périodicité de transmission,
   la périodicité de transmission étant égale à une première durée prédéfinie ($\Delta 1$) tant que la valeur précédente ($I_{prec}$) est supérieure ou égale au seuil maximal prédéfini ($S_{max}$) et tant que le nombre de mesures successives de valeurs de courant consommé supérieures au seuil maximal prédéfini ($S_{max}$) est inférieur à un premier nombre prédéterminé ($N_1$) ;
   la périodicité de transmission étant égale à une deuxième durée prédéfinie ($\Delta 2$) tant que la valeur précédente ($I_{prec}$) est inférieure au seuil maximal prédéfini ($S_{max}$), et tant que le nombre de transmissions successives de valeurs de courant consommé inférieures au seuil maximal prédéfini ($S_{max}$) est inférieur à un deuxième nombre prédéterminé ($N_2$) ;
   la périodicité de transmission étant égale à une troisième durée prédéfinie ($\Delta 3$) sinon,
   la première durée prédéfinie ($\Delta 1$) étant inférieure ou égale à la deuxième durée prédéfinie ($\Delta 2$) et la deuxième durée prédéfinie ($\Delta 2$) étant inférieure à la troisième durée prédéfinie ($\Delta 3$).

2. Procédé selon la revendication 1, dans lequel le premier nombre prédéterminé ($N_1$) et le deuxième nombre prédéterminé ($N_2$) sont compris entre 5 et 10.

3. Procédé selon l'une des revendications 1 et 2, dans lequel la première durée prédéfinie ($\Delta 1$) est supérieure ou égale à 2 secondes et la deuxième durée prédéfinie ($\Delta 2$) est supérieure ou égale à 5 secondes

4. Procédé selon l'une quelconque des revendications 1 à 3, dans lequel les étapes de modifier (406, 408) la consigne de recharge ($C_{ch}$) sont effectuées seulement lorsque la valeur absolue de la différence entre la valeur de courant consommé ($I_{cons}$) et le seuil maximal prédéfini ($S_{max}$) est supérieure ou égale à un deuxième seuil prédéfini (Z).

5. Procédé selon l'une des revendications 1 à 4, comportant en outre de réduire la consigne de recharge à une consigne minimale prédéfinie lorsqu'aucune nouvelle transmission de courant consommé n'est effectuée après une période de temporisation prédéfinie après une transmission précédente d'une valeur de courant consommé, la période de temporisation prédéfinie étant supérieure ou égale à la troisième durée prédéfinie.

6. Dispositif de pilotage d'une borne de recharge (110) destinée à recharger une batterie d'un véhicule électrique (111) et étant configurée pour délivrer un courant selon une consigne de recharge ($C_{ch}$) au véhicule électrique (111),

la borne de recharge (110) étant alimentée par un réseau électrique (10) délivrant un courant à au moins un autre équipement (101, 102, 103), le réseau électrique (10) comportant un organe de coupure configuré pour arrêter la circulation du courant avec un délai de réaction lorsque le courant consommé ($I_{cons}$) par le réseau électrique (10) atteint ou dépasse un seuil maximal prédéfini ($S_{max}$), le dispositif comportant des moyens pour transmettre périodiquement une valeur de courant consommé ($I_{cons}$) par l'ensemble du réseau électrique (10) avec une périodicité de transmission inférieure au délai de réaction de l'organe de coupure, le dispositif étant **caractérisé en ce qu'**il comporte, pour chaque valeur de courant consommé ($I_{cons}$) transmise :

- des moyens pour modifier (406) la consigne de recharge ($C_{ch}$) en soustrayant à ladite consigne de recharge ($C_{ch}$), la valeur absolue de la différence entre la valeur de courant consommé ($I_{cons}$) et le seuil maximal prédéfini ($S_{max}$), si la valeur de courant consommé ($I_{cons}$) est supérieure au seuil maximal prédéfini ($S_{max}$),
- des moyens pour modifier (408) la consigne de recharge ($C_{ch}$) en additionnant à ladite consigne de recharge ($C_{ch}$), la valeur absolue de la différence entre la valeur de courant consommé ($I_{cons}$) et le seuil maximal prédéfini ($S_{max}$), si la valeur de courant consommé ($I_{cons}$) est inférieure au seuil maximal prédéfini ($S_{max}$),

et **en ce que** le dispositif comporte, pour chaque valeur de courant consommé ($I_{cons}$) transmise, dite valeur précédente ($I_{prec}$), des moyens pour transmettre une nouvelle valeur de courant consommé ($I_{cons}$) selon la périodicité de transmission,

- la périodicité de transmission étant égale à une première durée prédéfinie ($\Delta1$) tant que la valeur précédente ($I_{prec}$) est supérieure ou égale au seuil maximal prédéfini ($S_{max}$) et tant que le nombre de transmissions successives de valeurs de courant consommé supérieures au seuil maximal prédéfini ($S_{max}$) est inférieur à un premier nombre prédéterminé ($N_1$) ;
- la périodicité de transmission étant égale à une deuxième durée prédéfinie ($\Delta2$) tant que la valeur précédente ($I_{prec}$) est inférieure au seuil maximal prédéfini ($S_{max}$), et tant que le nombre de déterminations successives de valeurs de courant consommé supérieures au seuil maximal prédéfini ($S_{max}$) est inférieur à un deuxième nombre prédéterminé ($N_2$) ;
- la périodicité de transmission étant égale à une troisième durée prédéfinie ($\Delta3$) sinon,

la première durée prédéfinie ($\Delta1$) étant inférieure ou égale à la deuxième durée prédéfinie ($\Delta2$) et la deuxième durée prédéfinie ($\Delta2$) étant inférieure à la troisième durée prédéfinie ($\Delta3$).

**7.** Produit programme d'ordinateur pouvant être stocké sur un support et/ou téléchargé d'un réseau de communication, afin d'être lu par un processeur, et **caractérisé en ce qu'**il comprend des instructions pour implémenter le procédé selon l'une des revendications 1 à 5, lorsque ledit programme d'ordinateur est exécuté par le processeur.

**8.** Support de stockage d'informations stockant un programme d'ordinateur comprenant des instructions pour implémenter le procédé selon l'une des revendications 1 à 5, lorsque ledit programme d'ordinateur est lu depuis ledit support de stockage et exécuté par le processeur.

**Patentansprüche**

**1.** Verfahren zur Steuerung einer Ladestation (110) zum Aufladen einer Batterie eines Elektrofahrzeugs (111) und die dazu ausgebildet ist, einen Strom gemäß einer Aufladevorgabe ($C_{ch}$) an das Elektrofahrzeug (111) abzugeben,

wobei die Ladestation (110) von einem Stromnetz (10) gespeist wird, das einen Strom an wenigstens eine andere Einrichtung (101, 102, 103) abgibt, wobei das Stromnetz (10) ein Abschaltorgan beinhaltet, das dazu ausgebildet ist, den Stromfluss mit einer Ansprechverzögerung anzuhalten, wenn der vom Stromnetz (10) verbrauchte Strom eine vorgegebene Höchstschwelle ($S_{max}$) erreicht oder überschreitet, wobei das Verfahren periodisches Übertragen eines Werts eines vom gesamten Stromnetz (10) verbrauchten Stroms ($I_{cons}$) mit einer Übertragungsperiodizität unterhalb der Ansprechverzögerung des Abschaltorgans beinhaltet, wobei das Verfahren **dadurch gekennzeichnet ist, dass** es für jeden übertragenen Wert verbrauchten Stroms ($I_{cons}$) folgende Schritte beinhaltet:

- Ändern (406) der Aufladevorgabe ($C_{ch}$) durch Subtraktion des Absolutwerts der Differenz zwischen dem Wert verbrauchten Stroms ($I_{cons}$) und der vorgegebenen Höchstschwelle ($S_{max}$) von der Aufladevorgabe ($C_{ch}$), wenn der Wert verbrauchten Stroms ($I_{cons}$) größer als die vorgegebene Höchstschwelle ($S_{max}$) ist,

- Ändern (408) der Aufladevorgabe ($C_{ch}$) durch Hinzuaddieren des Absolutwerts der Differenz zwischen dem Wert verbrauchten Stroms ($I_{cons}$) und der vorgegebenen Höchstschwelle ($S_{max}$) zu der Aufladevorgabe ($C_{ch}$), wenn der Wert verbrauchten Stroms ($I_{cons}$) kleiner als die vorgegebene Höchstschwelle ($S_{max}$) ist,

und dadurch, dass das Verfahren für jeden übertragenen Wert verbrauchten Stroms ($I_{cons}$), voriger Wert ($I_{prec}$) genannt, Übertragen eines neuen Werts verbrauchten Stroms gemäß der Übertragungsperiodizität beinhaltet,

wobei die Übertragungsperiodizität gleich einer ersten vorgegebenen Zeitdauer ($\Delta1$) ist, solange der vorige Wert ($I_{prec}$) größer als oder gleich der vorgegebenen Höchstschwelle ($S_{max}$) ist und solange die Anzahl von aufeinanderfolgenden Messungen von Werten verbrauchten Stroms, die größer als die vorgegebene Höchstschwelle ($S_{max}$) sind, kleiner als eine erste vorbestimmte Anzahl ($N_1$) ist;

wobei die Übertragungsperiodizität gleich einer zweiten vorgegebenen Zeitdauer ($\Delta2$) ist, solange der vorige Wert ($I_{prec}$) kleiner als die vorgegebene Höchstschwelle ($S_{max}$) ist und solange die Anzahl von aufeinanderfolgenden Übertragungen von Werten verbrauchten Stroms, die kleiner als die vorgegebene Höchstschwelle ($S_{max}$) sind, kleiner als eine zweite vorbestimmte Anzahl ($N_2$) ist;

wobei die Übertragungsperiodizität anderenfalls gleich einer dritten vorgegebenen Zeitdauer ($\Delta3$) ist,

wobei die erste vorgegebene Zeitdauer ($\Delta1$) kleiner als oder gleich der zweiten vorgegebenen Zeitdauer ($\Delta2$) und die zweite vorgegebene Zeitdauer ($\Delta2$) kleiner als die dritte vorgegebene Zeitdauer ($\Delta3$) ist.

2. Verfahren nach Anspruch 1, wobei die erste vorbestimmte Anzahl ($N_1$) und die zweite vorbestimmte Anzahl ($N_2$) zwischen 5 und 10 liegen.

3. Verfahren nach einem der Ansprüche 1 und 2, wobei die erste vorgegebene Zeitdauer ($\Delta1$) größer als oder gleich 2 Sekunden und die zweite vorgegebene Zeitdauer ($\Delta2$) größer als oder gleich 5 Sekunden ist.

4. Verfahren nach einem der Ansprüche 1 bis 3, wobei die Schritte des Änderns (406, 408) der Aufladevorgabe ($C_{ch}$) nur dann durchgeführt werden, wenn der Absolutwert der Differenz zwischen dem Wert verbrauchten Stroms ($I_{cons}$) und der vorgegebenen Höchstschwelle ($S_{max}$) größer als oder gleich einer zweiten vorgegebenen Schwelle (Z) ist.

5. Verfahren nach einem der Ansprüche 1 bis 4, ferner aufweisend Verringern der Aufladevorgabe auf eine vorgegebene Minimalvorgabe, wenn keine neue Übertragung verbrauchten Stroms nach einem vorgegebenen Verzögerungszeitraum nach einer vorhergehenden Übertragung eines Werts verbrauchten Stroms durchgeführt wird, wobei der vorgegebene Verzögerungszeitraum größer als oder gleich der dritten vorgegebenen Zeitdauer ist.

6. Vorrichtung zur Steuerung einer Ladestation (110) zum Aufladen einer Batterie eines Elektrofahrzeugs (111) und die dazu ausgebildet ist, einen Strom gemäß einer Aufladevorgabe ($C_{ch}$) an das Elektrofahrzeug (111) abzugeben,

wobei die Ladestation (110) von einem Stromnetz (10) gespeist wird, das einen Strom an wenigstens eine andere Einrichtung (101, 102, 103) abgibt, wobei das Stromnetz (10) ein Abschaltorgan beinhaltet, das dazu ausgebildet ist, den Stromfluss mit einer Ansprechverzögerung anzuhalten, wenn der vom Stromnetz (10) verbrauchte Strom ($I_{cons}$) eine vorgegebene Höchstschwelle ($S_{max}$) erreicht oder überschreitet,

wobei die Vorrichtung Mittel zum periodischen Übertragen eines Werts eines vom gesamten Stromnetz (10) verbrauchten Stroms ($I_{cons}$) mit einer Übertragungsperiodizität unterhalb der Ansprechverzögerung des Abschaltorgans beinhaltet,

wobei die Vorrichtung **dadurch gekennzeichnet ist, dass** sie für jeden übertragenen Wert verbrauchten Stroms ($I_{cons}$) Folgendes beinhaltet:

- Mittel zum Ändern (406) der Aufladevorgabe ($C_{ch}$) durch Subtraktion des Absolutwerts der Differenz zwischen dem Wert verbrauchten Stroms ($I_{cons}$) und der vorgegebenen Höchstschwelle ($S_{max}$) von der Aufladevorgabe ($C_{ch}$), wenn der Wert verbrauchten Stroms ($I_{cons}$) größer als die vorgegebene Höchstschwelle ($S_{max}$) ist,

- Mittel zum Ändern (408) der Aufladevorgabe ($C_{ch}$) durch Hinzuaddieren des Absolutwerts der Differenz zwischen dem Wert verbrauchten Stroms ($I_{cons}$) und der vorgegebenen Höchstschwelle ($S_{max}$) zu der Aufladevorgabe ($C_{ch}$), wenn der Wert verbrauchten Stroms ($I_{cons}$) kleiner als die vorgegebene Höchstschwelle ($S_{max}$) ist,

und dadurch, dass die Vorrichtung für jeden übertragenen Wert verbrauchten Stroms ($I_{cons}$), voriger Wert ($I_{prec}$) genannt, Mittel zum Übertragen eines neuen Werts verbrauchten Stroms ($I_{cons}$) gemäß der Übertragungsperiodizität beinhaltet,

- wobei die Übertragungsperiodizität gleich einer ersten vorgegebenen Zeitdauer ($\Delta 1$) ist, solange der vorige Wert ($I_{prec}$) größer als oder gleich der vorgegebenen Höchstschwelle ($S_{max}$) ist und solange die Anzahl von aufeinanderfolgenden Übertragungen von Werten verbrauchten Stroms, die größer als die vorgegebene Höchstschwelle ($S_{max}$) sind, kleiner als eine erste vorbestimmte Anzahl ($N_1$) ist;
- wobei die Übertragungsperiodizität gleich einer zweiten vorgegebenen Zeitdauer ($\Delta 2$) ist, solange der vorige Wert ($I_{prec}$) kleiner als die vorgegebene Höchstschwelle ($S_{max}$) ist und solange die Anzahl von aufeinanderfolgenden Bestimmungen von Werten verbrauchten Stroms, die größer als die vorgegebene Höchstschwelle ($S_{max}$) sind, kleiner als eine zweite vorbestimmte Anzahl ($N_2$) ist;
- wobei die Übertragungsperiodizität anderenfalls gleich einer dritten vorgegebenen Zeitdauer ($\Delta 3$) ist,

wobei die erste vorgegebene Zeitdauer ($\Delta 1$) kleiner als oder gleich der zweiten vorgegebenen Zeitdauer ($\Delta 2$) und die zweite vorgegebene Zeitdauer ($\Delta 2$) kleiner als die dritte vorgegebene Zeitdauer ($\Delta 3$) ist.

7. Computerprogrammprodukt, das auf einem Medium gespeichert und/oder aus einem Kommunikationsnetz heruntergeladen werden kann, um von einem Prozessor gelesen zu werden, und **dadurch gekennzeichnet ist, dass** es Anweisungen zur Implementierung des Verfahrens nach einem der Ansprüche 1 bis 5 bei Ausführung des Computerprogramms durch den Prozessor umfasst.

8. Informationsspeichermedium, das ein Computerprogramm speichert, das Anweisungen zur Implementierung des Verfahrens nach einem der Ansprüche 1 bis 5, wenn das Computerprogramm vom Speichermedium gelesen und vom Prozessor ausgeführt wird, umfasst.

**Claims**

1. Method for controlling a charging point (110) intended for charging a battery of an electric vehicle (111), and being configured to deliver a current to the electric vehicle (111) in accordance with a charging setting ($C_{ch}$),

the charging point (110) being supplied by an electrical network (10) delivering a current to at least one other item of equipment (101, 102, 103), the electrical network (10) comprising a disconnection member configured to stop the circulation of current with a reaction time when the current consumed by the electrical network (10) reaches or exceeds a predefined maximum threshold ($S_{max}$),
the method comprising periodically transmitting a value ($I_{cons}$) of the current consumed by the whole of the electrical network (10) with a transmission periodicity smaller than the reaction time of the disconnection member,
the method being **characterised in that** it comprises, for each consumed-current value ($I_{cons}$) transmitted, steps of:

- modifying (406) the charging setting ($C_{ch}$) by subtracting, from said charging setting ($C_{ch}$), the absolute value of the difference between the consumed-current value ($I_{cons}$) and the predefined maximum threshold ($S_{max}$), if the consumed-current value ($I_{cons}$) is higher than the predefined maximum threshold ($S_{max}$),
- modifying (408) the charging setting ($C_{ch}$) by adding, to said charging setting ($C_{ch}$), the absolute value of the difference between the consumed-current value ($I_{cons}$) and the predefined maximum threshold ($S_{max}$), if the consumed-current value ($I_{cons}$) is lower than the predefined maximum threshold ($S_{max}$),

and **in that** the method comprises, for each consumed-current value ($I_{cons}$) transmitted, referred to as the preceding value ($I_{prec}$), transmitting a new consumed-current value in accordance with the transmission periodicity,
the transmission periodicity being equal to a first predefined duration ($\Delta 1$) as long as the preceding value ($I_{prec}$) is greater than or equal to the predefined maximum threshold ($S_{max}$) and as long as the number of successive measurements of consumed-current values higher than the predefined maximum threshold ($S_{max}$) is lower than a first predefined number ($N_1$);
the transmission periodicity being equal to a second predefined duration ($\Delta 2$) as long as the preceding value ($I_{prec}$) is lower than the predefined maximum threshold ($S_{max}$), and as long as the number of successive transmissions of consumed-current values lower than the pre-

defined maximum threshold ($S_{max}$) is lower than a second predetermined number ($N_2$);
the transmission periodicity being equal to a third predefined duration ($\Delta 3$) otherwise,
the first predefined duration ($\Delta 1$) being less than or equal to the second predefined duration ($\Delta 2$) and the second predefined duration ($\Delta 2$) being less than the third predefined duration ($\Delta 3$).

2. Method according to claim 1, wherein the first predetermined number ($N_1$) and the second predetermined number ($N_2$) are between 5 and 10.

3. Method according to one of claims 1 and 2, wherein the first predefined duration ($\Delta 1$) is greater than or equal to 2 seconds and the second predefined duration ($\Delta 2$) is greater than or equal to 5 seconds.

4. Method according to any one of claims 1 to 3, wherein the steps (406, 408) of modifying the charging setting ($C_{ch}$) are performed only when the absolute value of the difference between the consumed-current value ($I_{cons}$) and the predefined maximum threshold ($S_{max}$) is greater than or equal to a second predefined threshold ($Z$).

5. Method according to one of claims 1 to 4, furthermore comprising reducing the charging setting to a predefined minimum setting when no new consumed-current transmission is made after a predefined time-delay period after a preceding transmission of a consumed-current value, the predefined time-delay period being greater than or equal to the third predefined duration.

6. Device for controlling a charging point (110) intended for charging a battery of an electric vehicle (111) and being configured to deliver a current to the electric vehicle (111) in accordance with a charging setting ($C_{ch}$),

   the charging point (110) being supplied by an electrical network (10) delivering a current to at least one other item of equipment (101, 102, 103), the electrical network (10) comprising a cutoff member configured to stop the circulation of current with a reaction time when the current ($I_{cons}$) consumed by the electrical network (10) reaches or exceeds a predefined maximum threshold ($S_{max}$),
   the device comprising means for periodically transmitting a value ($I_{cons}$) of the current consumed by the whole of the electrical network (10) with a transmission periodicity smaller than the reaction time of the disconnection member,
   the device being **characterised in that** it comprises, for each consumed-current value ($I_{cons}$) transmitted:

   - means for modifying (406) the charging setting ($C_{ch}$) by subtracting, from said charging setting ($C_{ch}$), the absolute value of the difference between the consumed-current value ($I_{cons}$) and the predefined maximum threshold ($S_{max}$), if the consumed-current value ($I_{cons}$) is higher than the predefined maximum threshold ($S_{max}$),
   - means for modifying (408) the charging setting ($C_{ch}$) by adding, to said charging setting ($C_{ch}$), the absolute value of the difference between the consumed-current value ($I_{cons}$) and the predefined maximum threshold ($S_{max}$), if the consumed-current value ($I_{cons}$) is lower than the predefined maximum threshold ($S_{max}$),

   and **in that** the device comprises, for each consumed-current value ($I_{cons}$) transmitted, referred to as the preceding value ($I_{prec}$), means for transmitting a new consumed-current value ($I_{cons}$) in accordance with the transmission periodicity,

   - the transmission periodicity being equal to a first predefined duration ($\Delta 1$) as long as the preceding value ($I_{prec}$) is greater than or equal to the predefined maximum threshold ($S_{max}$) and as long as the number of successive measurements of consumed-current values higher than the predefined maximum threshold ($S_{max}$) is lower than a first predefined number ($N_1$);
   - the transmission periodicity being equal to a second predefined duration ($\Delta 2$) as long as the preceding value ($I_{prec}$) is lower than the predefined maximum threshold ($S_{max}$), and as long as the number of successive determinations of consumed-current values higher than the predefined maximum threshold ($S_{max}$) is lower than a second predetermined number ($N_2$);
   - the transmission periodicity being equal to a third predefined duration ($\Delta 3$) otherwise,

   the first predefined duration ($\Delta 1$) being less than or equal to the second predefined duration ($\Delta 2$) and the second predefined duration ($\Delta 2$) being less than the third predefined duration ($\Delta 3$).

7. Computer program product that can be stored on a medium and/or downloaded from a communication network, in order to be read by a processor, and **characterised in that** it comprises instructions for implementing the method according to one of claims 1 to 5, when said program is executed by the processor.

8. Information storage medium storing a computer program comprising instructions for implementing the method according to one of claims 1 to 5, when said computer program is read from said storage medium and executed by the processor.

[Fig. 1]

[Fig. 2]

[Fig. 3]

[Fig. 4]

[Fig. 5]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013141042 A1